# EUROPEAN PATENT SPECIFICATION

(11) **EP 2 488 903 B1**
(45) Date of publication and mention of the grant of the patent: **09.09.2020**
(21) Application number: 10768054.8
(22) Date of filing: 12.10.2010
(51) Int. Cl.: G02B 6/00

(54) **LIGHT GUIDES**
LICHTLEITER
GUIDES LUMINEUX

(30) Priority: 12.10.2009 GB 0917785
(43) Date of publication of application: 22.08.2012
(73) Proprietor: Design LED Products Limited, Edinburgh EH3 9EP (GB)
(72) Inventor: GOURLAY, James, Livingston EH54 7GA (GB)
(74) Representative: Fulton, David James
(86) International application number: PCT/GB2010/051708
(87) International publication number: WO 2011/045589

(56) References cited:
- WO-A1-2008/139353
- WO-A1-2008/139353
- GB-A- 2 454 928
- GB-A- 2 454 928
- US-A1- 2007 121 340
- US-A1- 2007 121 340

## Description

### Field of the Invention

This invention relates to light guide devices and methods of manufacture. The light guide devices are suitable for use in a range of applications, particularly in connection with the backlighting of displays, for example, liquid crystal displays.

### Background of the Invention

A number of light guiding devices are known. These devices are employed for a range of functions including illumination, backlighting, signage and display purposes. Typically, the devices are constructed from an injection moulded or machined transparent plastic component, where a light source, such as a fluorescent lamp or a plurality of light emitting diodes (LEDs), is integrated by means of mechanical attachment at the edge of the transparent plastic component.

Common to all of these devices is the fact that light from the light source is guided through a transparent guide, typically made of plastic, by total internal reflection. For backlighting applications, light is emitted in a substantially perpendicular direction to that of the direction of propagation of the light within the transparent guide. This is achieved through the light being directed so as to interact with scattering structures or films located within, or on the surface of, the transparent guide.

The integration of fluorescent lamps or LEDs to the edge of the transparent light guide is not a straightforward process and thus significantly increases the complexity of the production process for these devices. Achieving a good coupling of the light source and the light guide is essential to the optical performance of the device. In addition, edge coupling of the light sources renders these components susceptible to mechanical damage during both the production process and the normal use of the device.

In seeking to provide thin direct lit backlights, it is preferable to have light emitted into the plane of the light guide. Further benefit may be obtained if the light sources are distributed across the panel, so minimising the length of guiding in the light guide. This has the benefit of creating a thin and efficient backlight but has the disadvantage of compromising the light uniformity. For example, the light uniformity may be compromised through the creation of dark spots and/or more intense areas of light above or in the vicinity of the light sources. Preferably, these dark spots and/or more intense areas of light should not be visible or, at least, reduced in appearance in order to provide at least acceptable, and more preferably, improved light uniformity. Existing solutions to this problem tend to add considerable thickness to the backlight.

Many backlights fall into the categories of "edge-lit" or "direct-lit". These categories differ in the placement of the light sources relative to the output of the backlight, where the output area defines the viewable area of the light guide device. In edge-lit backlights, one or more light sources are disposed along an outer border or edge of the backlight construction outside the zone corresponding to the output area. The light sources typically emit light into a light guide, which has length and width dimensions of the order of the output area and from which light is extracted to illuminate the output area. In direct-lit backlights, an array of light sources is disposed directly behind the output area, and a diffuser is placed in front of the light sources to provide a more uniform light output. Some direct-lit backlights also incorporate an edge-mounted light, and are thus illuminated with a combination of direct-lit and edge-lit illumination.

Other challenges facing display manufacturers, such as those incorporating large area LED Back Light Units (BLUs) include producing a thin and efficient device which enables 2-d or 3-d spatial dimming to support high display performance and reduced power consumption. This has proved problematic for both edge-lit and direct lit devices and has typically resulted in thicker backlight devices. 2-d dimming relates to when the image content of the display is achieved by only switching on selected areas of the backlight which match or correspond to the desired image thus resulting in significant power reduction. 3-d dimming further incorporates the use of colour.

The beam angle of light emerging from a backlight and the uniformity of said beam angle are important in determining the efficiency and the viewing angle of the display that is being illuminated. Some degree of control over the range of light output angles provided by the backlight is desirable.

It is an object of the present invention to provide a light guiding device that addresses one or more of the aforesaid issues.

### Summary of the Invention

According to a first aspect of the present invention there is provided a light guide device comprising:
a base substrate upon a first surface of which are mounted one or more light sources and a first light guide layer, the first light guide layer being arranged so as to encapsulate the one or more light sources upon the first surface;
a cladding layer at the interface between the base substrate and the first light guide layer; and
light extraction features. The invention is defined in the accompanying claims.

The light guide device comprises a light output area or surface which defines the viewable area of the light guide device. The light guide device comprises one or more features or structures that break or disrupt the total internal reflection of guided light and which are also referred to herein as light extraction features. For example, the light guide device may comprise one or more scattering and/or reflective and/or refractive structures arranged so as to direct light away from the first surface of the base substrate. The one or more scattering and/or reflective structures and/or refractive structures may be located at the interface between the base substrate and the first light guide layer and/or on the lower surface of the substrate which is opposite the first surface. The light may be directed away in a substantially perpendicular direction in relation to the plane of the base substrate. The light may be directed in the direction of the light output surface. The light may be reflected back through the light guide device, using, for example, a reflecting element thus providing the possibility of an alternative light output surface. The light guide device may comprise a diffuser located above the light output surface. The one or more scattering and/or reflective structures and/or refractive structures may be located on the surface of the first light guide layer which is opposite the surface of the light guide layer which forms an interface with the base substrate.

Accordingly, the present invention provides a light guide device comprising:
a base substrate upon a first surface of which are mounted one or more light sources and a first light guide layer, the first light guide layer being arranged so as to encapsulate the one or more light sources upon the first surface;
a cladding layer at the interface between the base substrate and the first light guide layer; and
light extraction features located at the interface between the base substrate and the first light guide layer or on a second surface of the base substrate which is opposite the first surface or on the surface of the first light guide layer which is opposite the surface of the first light guide layer which forms an interface with the base substrate.

The base substrate may have a first refractive index which is greater than or equal to the refractive index of the first light guide layer which may conveniently be said to possess a second refractive index.

The cladding layer comprises a number of apertures which may also be referred to as gaps or holes. The light extraction features may advantageously be located in the apertures or on the second surface of the base substrate which is opposite and substantially parallel to the first surface of the base substrate. The cladding layer may serve to confine the light to the first light guide layer by total internal reflection. This may be achieved by the cladding layer having a lower refractive index than the first guide layer. The cladding layer may be transparent.

Accordingly, the present invention provides a light guide device comprising:
a base substrate upon a first surface of which are mounted one or more light sources and a first light guide layer, the first light guide layer being arranged so as to encapsulate the one or more light sources upon the first surface;
a transparent layer at the interface between the base substrate and the first light guide layer, wherein the transparent layer has a lower refractive index than the first guide layer; and
light extraction features.

The present invention also provides a light guide device comprising:
(i) a base substrate upon a first surface of which are mounted one or more light sources and a first light guide layer, the first light guide layer being arranged so as to encapsulate the one or more light sources upon the first surface;
(ii) a transparent layer at the interface between the base substrate and the first light guide layer, wherein the transparent layer has a lower refractive index than the first guide layer and confines light to the first guide layer by total internal reflection; and
(iii) light extraction features.

Upon the first light guide layer there may be mounted a second light guide layer having a third refractive index that is equal to or greater than the refractive index of the first light guide layer and at the interface between the first and second light guide layers and above the one or more sources of light may be located one or more light scattering and/or reflective and/or refractive structures. The presence of these structures serves to conceal the location of the light sources and to provide a more uniform light output. The presence of the second light guide layer with the appropriate refractive index provides a device wherein the light may be totally internally reflected within the first and second light guide layers.

According to a second aspect of the present invention, there is provided a method of producing a light guide device, the method comprising:
(i) applying a cladding layer onto a first surface of a base substrate;
(ii) mounting one or more light sources onto the clad first surface of the base substrate;
(iii) adding a first light guide layer to the first surface so as to encapsulate the one or more light sources upon the first surface of the base substrate;
(iv) applying one or more light extraction features, for example, one or more scattering and/or reflective structures and/or refractive structures onto the first surface comprising the cladding layer or a second surface of the base substrate which is opposite the first surface or on the surface of the first light guide layer which is opposite the surface of the first light guide layer which forms an interface with the base substrate.

In the method according to the second aspect of the present invention, rather than applying the one or more light extraction features in (iv) the base substrate may be a microstructured film wherein the microstructures are located on the second surface of the base substrate which is opposite the first surface. The method may comprise applying one or more extraction features in a combination of the positions specified.

For the embodiment where the one or more light extraction features are applied to the first surface of the base substrate comprising the cladding layer this is carried out prior to the addition of the first light guide layer.

The one or more light extraction features may be in the form of a microstructured film. The microstructured film may be located on the second surface of the base substrate which is opposite the first surface. The base substrate may be a microstructured film. Optionally, a heat sink plate may be added to the second surface of the base substrate which is opposite the first surface of the base substrate, wherein the heat sink plate may be in contact with said base substrate via discrete portions of thermal bonding material.

Optionally, upon the first light guide layer there may be mounted a second light guide layer having a third refractive index that is equal to or greater than the refractive index of the first guide layer and at the interface between the first and second light guide layer and above the one or more sources of light may be located one or more light scattering and/or reflective and/or refractive structures.

The method of adding the first light guide layer to the first surface of the base substrate and, optionally, the method of adding a second light guide layer to the first light guide layer may comprise:
i. applying a liquid polymer on the first surface of the base substrate and/or first light guide layer; and
ii. curing the liquid polymer on the first surface of the base substrate and/or first light guide layer.

The method of applying the liquid polymer on the first surface of the base substrate and/or the first guide layer may comprise printing, stencilling or dispensing the liquid polymer. The method of applying light extraction features such as one or more scattering and/or reflecting and/or refracting structures which may be suitable for redirecting light away from the first surface of the base substrate may comprise printing a patterned, reflecting ink layer.

Optionally, a reflective sheet may be applied to the second surface of the base substrate or the surface of the first light guide layer which is opposite the surface of the first light guide layer which forms an interface with the base substrate.

The base substrate and light guide layers are advantageously light transmissive and preferably transparent to the light generated by the one or more light sources. However, the base substrate may also be opaque. For example, the base substrate may be opaque and absorbing or the base substrate may be opaque and reflecting. The terms "transparent", "opaque" and "transmissive" relate to the optical properties of particular components of the device relative to the wavelength of the light generated by the incorporated light sources.

According to a third aspect of the present invention, there is provided a display device comprising a light guiding device according to the various aspects including the first aspect of the invention. The display device may be a liquid crystal display device and may therefore comprise a liquid crystal cell which may also be referred to as a liquid crystal panel.

The one or more light sources direct at least some light parallel or substantially parallel to the plane of the base substrate. Advantageously, the one or more light sources may comprise, or consist of, or consist essentially of side emitting LEDs. Preferably, the one or more light sources form an array of side emitting LEDs across the base substrate in a direct-lit arrangement. Preferably, a portion of the light emitted by the one or more light sources is not coupled into the light guide but is directed normal or substantially normal to the base substrate and in the direction of the light output surface. Typically, this is less than about 20% of the light emitted from the one or more light sources, for example less than about 10% of the light emitted from the one or more light sources, for example about 2% or less of the light emitted from the one or more light sources. The one or more light sources may also include a number of top emitting LEDs. The top emitting LEDs emit light substantially perpendicularly to the main light output of the side emitting LEDs and in the direction of the light output surface. The array of side emitting LEDs may form a two dimensional array of side emitting LEDs in a direct-lit arrangement. The array may comprise, consist of, or consist essentially of a number of rows and/or columns of LEDs which may vary in which direction they direct at least some light substantially parallel to the plane of the base substrate. For example, the LEDs may be arranged so that for an LED in a particular column or row the LED may direct light in substantially the opposite direction when compared with either of the two LEDs to which it is immediately adjacent in said column or row. For example, for two adjacent LEDs, the angle between the direction of light generated by the first LED in a first direction which is substantially parallel to the plane of the base substrate and the direction of light generated by the second LED in a second direction which is also substantially parallel to the plane of the base substrate may be about 180°. In a given row or column, the LEDs may be positioned so that they are substantially in a straight line. The LEDs may be positioned so that alternate LEDs are in a straight line thus forming two substantially parallel lines of LEDs in a given row or column.

The arrangement of the light guide layer or layers in relation to the light sources provides a light guiding device that exhibits enhanced mechanical protection for the light sources. Furthermore, a device is provided that is simple to produce and which exhibits enhanced optical coupling of the light within the device. The generated light may be guided within both the base substrate and/or the light guide layer or layers due to the effects of total internal reflection. The devices and methods in accordance with the present invention provide means for guiding light produced by the one or more light sources within the composite structure and over the first surface of the base substrate by total internal reflection.

The present invention seeks to provide one or more of the following: a more uniform light guide device (including uniform or substantially uniform luminance) with reduced/no dark spots when viewed in use; efficient light distribution resulting in lower power requirements; a thinner, lighter structure; a device comprising a reduced number of system components. The devices according to the present invention may advantageously be used for 2-d and 3-d dimming. The presence of the cladding layer also allows for increased density of components such as electrical tracking on or in the base substrate. Other advantages associated with the various aspects of the present invention include providing a desirable beam angle for the light output and good uniformity of said beam angle. The present invention also allows for the output angle to be controlled so the viewing angle can be set accordingly.

### Detailed Description of the Invention

### Base substrate

The base substrate may be light transmissive and may be transparent. Alternatively, the base substrate may be opaque. The base substrate may be opaque and light absorbing or opaque and reflecting. The base substrate may be formed from a transparent polymer sheet such as polyester or polycarbonate. The thickness of the base substrate may typically be of the order of about 0.1mm, for example in the range of about 0.1mm to about 0.2mm. The base substrate may have a first refractive index, wherein said refractive index is optionally greater than or equal to the refractive index of the first light guide layer. The refractive index of the base substrate is typically equal to or greater than about 1.5. For example, the refractive index of the base substrate may be 1.50 to 1.61. For example, the refractive index of the base substrate may be 1.50 to 1.58. The base substrate may be a microstructured film. For example, the base substrate may be a Brightness Enhancement Film (BEF).

### Light sources

The light source can be any of those known to those skilled in the art, including those which are suitable for use in backlighting. Such light sources may include one or more LEDs. The light may be non-directional. The LEDs can be any of the designs known to those skilled in the art, including edge-emitting, side emitting, top emitting or bare die LEDs. The LEDs may be selected from one or more of a range of colours. For example, the LEDs may be white. White light may also be generated by combining red, green and blue LEDs. Typically, an LED suitable for use in the present invention is of the order of about 1mm in each dimension.

The light sources are typically arranged to direct substantially all or most of the light into the light guide. Advantageously, they may be selected from side-emitting LEDs wherein the light is directed parallel, or substantially parallel to the plane of the base substrate. Even more advantageously, a proportion of the light may not be coupled into the light guide but is allowed to propagate in the direction of the output surface of the light guide device. For example, less than about 20% of the light emitted from the one or more light sources, for example less than about 10% of the light emitted from the one or more light sources, for example about 2% or less of the light is allowed to propagate in such a manner. The effect of allowing this light to propagate towards the output surface is that the appearance or precise location of the light sources is not evident, or effectively concealed when viewed in normal use and the light is distributed more uniformly. In particular, this light allows a diffuser to be positioned more closely to the light guide layer than in other conventional backlights.

Advantageously, the one or more light sources are arranged to provide direct-lit light guide devices, including direct-lit backlight units. The one or more light sources may form an array of light sources across the base substrate in a direct-lit arrangement. For example, the array may comprise, consist of or consist essentially of an array of side-emitting LEDs in a direct-lit arrangement. Such an array may also include a number of top emitting LEDs.

Electrical tracks may be patterned onto the base substrate which may be transparent, so forming electrical bonding pads for the one or more light sources and electrical connections for external electrical driving equipment. The electrical tracks may be patterned by etching methods, for example, using copper or gold, or by additive screen printing methods, for example, using silver loaded adhesive. The LED light sources may be electrically and mechanically attached to the electrical bonding pads by soldering or conducting adhesive methods. The presence of the cladding layer means that more design freedom is afforded in connection with the tracking and other elements. This is because the cladding layer serves to conceal the appearance of the electrical tracking and other elements which may be present in or on the substrate. For example, the use of the cladding layer is particularly advantageous in connection with red, green and blue packaged side-emitting LEDs.

### The light guide layers

The first and second light guide layers (which may more generally be referred to as guide layers) may be made from a range of suitable light transmissive materials. Advantageously, the guide layer or layers possess a high optical transmission and are preferably transparent. The first and/or second guide layer may comprise a transparent flexible plastic polymer layer. The first and/or second guide layer may be about 1mm in thickness. The first and/or second guide layer may have a refractive index of about 1.46 to 1.56.

The guide layers may be made from a range of available polymers, including acrylics, urethanes or polycarbonates. The refractive indices of the first and second guide layers may be substantially the same or the refractive index of the second guide layer may be higher than the first guide layer. For the situation where the second light guide layer has a higher refractive index, the difference in refractive indices may be as high as about 10%.

The first guide layer and base substrate and optionally, if present, the second guide layer may be combined using a standard lamination technique. Such a technique may require the use of a transparent adhesive which has a refractive index which is higher than the first guide layer and the base substrate. The first guide layer and base substrate and second guide layer (if present) may be optically joined during manufacture. The method of combining the first guide layer and the base substrate and the second guide layer with the first guide layer may comprise applying and curing a liquid polymer layer. Methods of curing may make use of one or more techniques including UV, thermal or two-part curing. The method may comprise printing, stencilling or dispensing the liquid polymer. Optically joined indicates the layers are combined in such a way that, optically, these layers are effectively indistinguishable.

### Cladding Layer

The cladding layer is present at the interface between the base substrate and the first light guide layer. The refractive index of the cladding layer may be less than the refractive index of the first light guide layer in order to maintain total internal reflection of light within the first light guide layer and thus isolating optical beams from the base substrate and concealing the presence of electrical tracking which may be embedded in the base substrate or deposited on the base substrate. Suitably, the refractive index of the cladding layer may be about 1.3 to 1.41.

In order to extract light from the light guide device, apertures, gaps, holes or discontinuations in the cladding layer may be present. Light which is incident at an aperture is no longer guided within the light guide layer but passes through to the base substrate where it interacts with a light extraction feature. Alternatively, the light extraction features may be applied in the gaps in the cladding layer and/or onto the cladding layer. In a further embodiment, the light extraction features may be located on the top surface of the first light guide layer, the top surface being opposite the surface of the light guide layer which is in contact with the base substrate.

The apertures in the cladding layer may vary in size and shape. This may depend on how close to the light source the aperture is located. The intensity of the light becomes less as the distance from the light source increases. To take account of this, larger apertures and/or a greater density of apertures may be present in the cladding layer as the distance from the light source increases.

The cladding material may be selected from a transparent material, e.g. a transparent polymer material. For example, the cladding material may be selected from an epoxy, silicon or fluoropolymer. Advantageously, the cladding layer may be applied to the substrate using a printing technique. The cladding material may be a printable UV curable material, for example a UV curable epoxy such as Dymax op-4-20725 which has a refractive index of 1.41. The thickness of the cladding material may typically be greater than about 1 micron. The thickness of the cladding material may typically be less than about 10 microns. The cladding layer may be applied to form a thin pattern of features, according to any of a number of methods and which may be referred to in general terms as an additive printing process. For example, conventional screen printing incorporates the use of a mesh screen with openings corresponding to the pattern required to be printed. This pattern facilitates the accurate delivery of a volume of material, e.g. ink to the required areas. Suitable inks include those which may be UV or solvent cured. Other suitable examples of additive printing methods include stencil printing, ink jet printing, flexographic printing and other known lithographic techniques.

### Light extraction features

The light guide device comprises one or more features that break or disturb the total internal reflection of the guided light. These features may suitably be selected from light scattering and/or reflective and/or refractive structures. These features may be located in one or more of a number of locations. For example, they may be present on the second surface of the base substrate opposite the surface which forms the interface with the first light guide layer. For example, they may be present at the interface formed by the first light guide layer and the base substrate. When present at said interface, they may be present in gaps in the cladding layer or they may be deposited on to the cladding layer. For example, they may be present on the top surface of the first light guide layer, the top surface being opposite the surface of the light guide layer which is in contact with the base substrate.

The application of the light extraction features or structures may be accomplished using standard printing, micromoulding, microstamping and microembossing techniques. Suitable scattering structures may be in the form of a patterned reflecting ink layer. Suitable scattering features include highly reflective white printed ink dots. In such an arrangement, each dot disturbs the total internal reflection of the guided light and causes the light to be scattered randomly and to escape from the light guide. The size and/or pitch of the dots may be varied to ensure uniform light scatter.

The extraction features may comprise or consist of an ink, which may be a polymeric material. The ink may be applied to the base substrate or cladding material or first guide layer to form a thin pattern of features, according to any of a number of methods and may be referred to in general terms as an additive printing process. For example, conventional screen printing incorporates the use of a mesh screen with openings corresponding to the pattern required to be printed. This pattern facilitates the accurate delivery of a volume of material, e.g. ink to the required areas. Suitable inks for use in the present invention include those which may be UV or solvent cured. Other suitable examples of additive printing methods include stencil printing, ink jet printing, flexographic printing and other known lithographic techniques. The ink may be applied in varying amounts and shapes.

Other suitable features or structures include microstructured surfaces which comprise a plurality of three dimensional features, or irregularities, which are proud of the surface and arranged on a scale of about 1 to about 1000 microns, independently, in width, depth and pitch, preferably about 5 to about 50 microns, more preferably about 20 to about 50 microns. Specific types of microstructures, or features, which are suitable for use in the present invention include prisms, pyramids, (micro)lenses, e.g. cylindrical or circular shaped lenses and random diffusing structures.

Prism based microstructures may have a saw tooth shape structure varying in one direction across the entirety of the surface with a pitch of about 50 microns, wherein the pitch is the distance between the centre of adjacent microstructures. (Micro)lenses have a regular or random distribution of lenses, which may be of a low focal length, distributed across the surface on a scale of about 10 to 20 microns. The diffusing structures may possess a random surface texture which is also on a scale (depth and pitch) of about 10 to 100 microns.

Brightness Enhancement Films (BEFs) are suitable microstructured films for use in the present invention for extracting light from the light guide devices. A suitable example of a microstructured film is BEF III Brightness Enhancement Film, which is commercially available from 3M. A particular film from this range is made from a polyester substrate of thickness 127 microns and possesses a prism structure, varying in one direction, in acrylic polymer. The prism structure is 28 microns high, has a pitch of 50 microns and the prism angle is 90°. The use of microstructured films may redirect the incident light at a preferential angle of distribution, i.e. about +/- 30° from the normal at full width half maximum. Microstructured films such as BEFs may advantageously be positioned on the second surface of the base substrate or constitute the base substrate. For example, a microstructured film may be laminated on to a base substrate such as a polyester film. The refractive index of the microstructured film, e.g. brightness enhancement film, may be about 1.50 to 1.61. The microstructured or brightness enhancement film may comprise a polyethylene substrate, for example a polyethylene terephthalate film of refractive index about 1.61. The polyethylene substrate, e.g. the polyethylene terephthalate film may possess an acrylic layer with features or structures formed, e.g. by embossing, in the acrylic layer. For example, the features or structures formed in the acrylic layer may be prisms of refractive index of about 1.58 to 1.59. These prisms may be embossed in the acrylic layer. Other suitable microstructured films include those possessing features or structures which have been formed or extruded from the material forming the substrate of the film. For example, the microstructured film may suitably be a polycarbonate substrate possessing polycarbonate prisms. The refractive index of such a polycarbonate microstructured film may be about 1.55 and above.

An additional reflective element, e.g. a reflective sheet may, optionally, be located below the second surface of the base substrate in order to re-direct light which would otherwise be directed in a direction significantly away from the direction in which the device is intended to be viewed, for example, when used as a backlight. Alternatively, the optional additional reflective element may be located above the upper surface of the first light guide layer and redirect light back through the light guide device and in the direction of the base substrate.

### Heat sink plate

A heat sink plate may be located behind and substantially parallel to the base substrate and may be connected to the substrate via discrete portions of thermal bonding material.

The thermal bonding material may advantageously be located in line or substantially in line with the one or more light sources. The positioning of the discrete portions of thermal bonding material means that there is an air gap located between the substrate and the heat sink plate and between the discrete portions of thermal bonding material. The air gap means that the heat sink plate does not interfere with the light guiding mechanism and ensures uniform light scattering from the features that break the total internal reflection of the guided light, e.g. scattering features. Advantageously, the base substrate and the heat sink plate are not optically coupled. A backlight reflector element, e.g. film may be located in the vicinity of the air gap or gaps to improve optical efficiency. For example, the backlight reflector film may be located on the lower surface of the substrate and/or on the upper surface of the heat sink plate.

The heat sink plate may be made from materials which assist in the dissipation of the heat. Suitable examples include metals such as aluminium. The heat sink plate may typically be about 0.2mm to 10mm in thickness. The thermal bonding material may be an adhesive such as an epoxy or a silicone or it may be a pressure sensitive adhesive tape or screen/stencil printable polymer with high thermal conductivity. The adhesive may be applied using a needle or by using screen printing. The adhesive tape may be applied using a standard taping machine. The substrate and heat sink may be combined using lamination techniques.

### Diffuser

A diffuser may be positioned more closely to the light guide layer when compared with more conventional light guide devices. For example, the distance from the top of the light guide layer to the bottom of the diffuser may be less than about 12mm. For example, the distance may be as low as about 9mm.

The diffuser may be kept separate from the light guide layer by means of a conventional spacing arrangement. For example, a spacing element is located around the edge of the first or second (if present) light guide layer. The diffuser may be chosen from conventional diffusers used in backlights.

### Uses of the Light Guide Devices

The light guide devices according to the present invention may be employed for a range of functions including illumination, backlighting, signage and display purposes.

Liquid crystal devices are well known in the art. A liquid crystal display device operating in a transmissive mode typically comprises a liquid crystal cell, which may also be referred to as a liquid crystal panel, a backlight unit which may incorporate a light guide device, and one or more polarisers. Liquid crystal cells are also well known devices. In general, liquid crystal cells typically comprise two transparent substrates between which is disposed a layer of liquid crystal material. A liquid crystal display cell may comprise two transparent plates which may be coated on their internal faces respectively with transparent conducting electrodes. An alignment layer may be introduced onto the internal faces of the cell in order that the molecules making up the liquid crystalline material line up in a preferred direction. The transparent plates are separated by a spacer to a suitable distance, for example about 2 microns. The liquid crystal material is introduced between the transparent plates by filling the space in between them by flow filling. Polarisers may be arranged in front of and behind the cell. The backlight unit may be positioned behind the liquid crystal cell using conventional means. In operation, a liquid crystal cell, operating in a transmissive mode, modulates the light from a light source such as a backlight unit which may comprise a light guide device.

### Brief Description of the Drawings

Embodiments of the invention will now be described, by way of example only and without limitation, with reference to the accompanying drawings and the following Examples, in which:

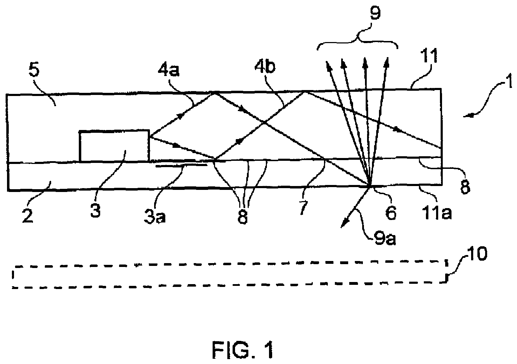

Figure 1 illustrates a light guide device according to the present invention.

In Figure 1, a light guide device (1) in side elevation comprises a base substrate (2) which may be made from a transparent polymer sheet such as polyester or polycarbonate and having a refractive index n2. On top of the base substrate (2) and on a first surface thereof are bonded a number of light sources (3) in the form of LEDs. Electrical bonds are generally indicated at (3a). For convenience, the electrical bonds are shown within the base substrate. However, these may be located on the first surface of the base substrate and underneath a cladding layer. The distance between the LEDs is typically about 10mm to about 200mm. The LEDs illustrated are side emitting LEDs and the direction of the light emitted from the LEDs is indicated at (4a and 4b) and is directed substantially parallel to the plane of the substrate. In an alternative embodiment, there may also be present a number of top emitting LEDs which transmit light substantially perpendicularly to the plane of the base substrate and substantially in the direction of the light output surface (11). Covering the LEDs and the remaining area of the top surface of the transparent base substrate (2) is a first transparent light guide layer (5) also formed from a plastic polymer and having a refractive index n4. Located on the lower surface of the base substrate (2) may be a light extraction feature, e.g. a scattering structure (6) in the form of a patterned reflecting ink layer. Alternatively, there may be present a microstructured film such as a brightness enhancement film in contact with the lower surface of the base substrate. The base substrate may be a microstructured film such as a brightness enhancement film.

At the perimeter interface between the transparent base substrate (2) and the first transparent guide layer (5), a cavity layer structure (not shown) may be incorporated in order to form a suitable cavity in which the LEDs (3) may be embedded. The refractive indices of the transparent base substrate (2) and the first transparent light guide layer (5) may be such that they satisfy the inequality n2 ≥ n4. At the interface between the base substrate (2) and the guide layer (5) is located a cladding layer (8) which may be a transparent polymer material such as a fluoropolymer. The cladding layer illustrated comprises a number of apertures. In a comparative example, not according to the invention the cladding layer could be continuous and comprise no apertures.

Light, generated by the LED light sources (3) is initially coupled into the transparent guide layer (5) so as to propagate in a direction substantially parallel to a plane defined by the transparent base substrate (2). The generated light is guided within the light guide layer (5). When the light has propagated as far as the aperture (7) in the cladding layer, it is no longer guided within the guide layer (5) and interacts with the scattering structure (6) on the lower surface of the base substrate so as to be redirected and so exit (9) the device via the top surface (11) of the transparent guide layer (5) so providing a backlighting function. The light extraction feature (6) which may be scattering and/or reflective structures and/or refracting structures may comprise highly reflective white ink dots. Both the dot size and/or pitch may be varied in order to fine tune the scattering effects.

Some of the light scattered by the light extraction feature (6) will be directed substantially in the opposite direction to that shown at (9) and is indicated at (9a). In order to take account of this, also shown is the optional presence of a reflective element (10), should it be required to redirect light (9a) back through the light guide device so that it exits through the top surface (11) which in this instance may also be referred to as the output surface. Alternatively, and if desired, the reflective element (10) can be positioned above the top surface (11) and the light indicated at (9) may be redirected back through the light guide device thus defining the output surface as (11a). The latter arrangement is preferred when the light extraction features are located on the top surface of the light guide layer (5) which in the embodiment illustrated in Figure 1 corresponds to (11) though the output surface will be (11a).

As a result of the fact that there is no air gap between the output of the light sources and the light guiding media, the transparent guide layer provides a simpler and enhanced means of optically coupling the light within the device.

### Examples

### Example 1

A device in accordance with the invention was constructed as follows. A microstructured film, commercially available from 3M (BEF III), was used as a base substrate. The BEF III comprised features possessing a height of 50 microns, a pitch of 50 microns and a prism angle of 90°. On the top side (first surface) of the BEF was printed conducting tracks (silver particle loaded conducting epoxy) and conducting adhesive in order to mount a number of LEDs (Stanley Tw1145ls-tr) onto the substrate and provide suitable electrical connections onto the conducting tracks. A low refractive index (1.41) cladding material (Dymax op-4-20725) was screen printed onto the top (first) surface of the substrate and above the tracking. The pattern of apertures in the cladding was pitched at 1000 microns, with a width of about 100 microns when located close to the positions of the LEDs, increasing towards about 800 microns when located in between LEDs. A cavity, about 0.7mm deep was formed around the perimeter of the base substrate using a cavity layer structure. The cavity was then filled with UV curing transparent polymer (Dymax 4-20688), thus forming a first light guide layer. A spacing element was positioned and secured on the first light guide layer and the diffuser (Shin Wha 97% haze film) was positioned on the spacing element. The distance of the diffuser to the light guide layer was 9mm. Good uniformity of light was observed from the extracted light possessing an angle of distribution of about +/- 30° from the normal at full width half maximum. Further, the positions of the LEDs were concealed from observation from above, by the combination of light not coupled into the light guide layer and the diffuser.

## Claims

1. A light guide device (1) comprising:
a base substrate (2) upon a first surface of which are mounted one or more light sources (3) and a first light guide layer (5), the first light guide layer (5) being arranged so as to encapsulate the one or more light sources (3) upon the first surface; and
light extraction features (6);
**characterised by**
a cladding layer (8) at the interface between the base substrate (2) and the first light guide layer (5), wherein the cladding layer (8) has a refractive index lower than that of the first light guide layer (5) so as to achieve total internal reflection of light within the first light guide layer (5); and
wherein the light extraction features (6) are located on a second surface of the base substrate (2) which is opposite the first surface of the base substrate (2) and comprise a microstructured film; and
wherein the cladding layer (8) comprises a number of apertures (7).

2. A light guide device (1) according to claim 1, wherein the microstructured film is the base substrate (2).

3. A light guide device (1) according to either of claims 1 or 2, wherein the microstructured film is a brightness enhancement film.

4. A light guide device (1) according to any one of the previous claims wherein the one or more light sources (3) comprise LEDs.

5. A light guide device (1) according to claim 4 wherein the one or more LEDs comprise, consist of, or consist essentially of side emitting LEDs and are arranged in an array across the base substrate (2) in a direct-lit arrangement.

6. A light guide device (1) according to any one of the previous claims, wherein the base substrate (2) is transparent.

7. A light guide device (1) according to any one of the previous claims wherein the cladding layer (8) is a transparent polymer material.

8. A light guide device (1) according to any one of the previous claims, wherein the first light guide layer (5) is a transparent flexible polymer material.

9. A light guide device (1) according to any one of the previous claims, wherein the cladding layer (8) is thicker than 1 micron and less than 10 microns.

10. A light guide device (1) according to any one of the previous claims further comprising a heat sink plate.

11. A display device comprising the light guide device (1) according to any one of claims 1 to 10.

12. A method of producing a light guide device (1), the method comprising:
(i) mounting one or more light sources (3) onto a first surface of a base substrate (2);
(ii) adding a first light guide layer (5) to the first surface so as to encapsulate the one or more light sources (3) upon the first surface of the base substrate (2);
**characterised by**:
applying a cladding layer (8) onto the first surface of the base substrate (2) before adding the first light guide layer (5) so as to provide the cladding layer (8) at the interface between the base substrate (2) and the first light guide layer (5);
wherein the cladding layer (8) has a refractive index lower than that of the first light guide layer (5) so as to achieve total internal reflection of light within the first light guide layer (5);
wherein light extraction features (6) are provided on a second surface of the base substrate (2) which is opposite the first surface and comprise a microstructured film; and
wherein the cladding layer (8) comprises a number of apertures (7).

## Patentansprüche

1. Ein Lichtführungsgerät (1), das Folgendes umfasst:
ein Basissubstrat (2), auf dessen erster Oberfläche eine oder mehrere Lichtquellen (3) und eine erste Lichtführungsschicht (5) angebracht sind, wobei die erste Lichtführungsschicht (5) so angeordnet ist, dass sie die eine oder die mehreren Lichtquellen (3) auf der ersten Oberfläche einschließt, und
Lichtextraktionsmerkmale (6);
**gekennzeichnet durch**
eine Mantelschicht (8) an der Grenzfläche zwischen dem Basissubstrat (2) und der ersten Lichtführungsschicht (5), wobei die Mantelschicht (8) einen niedrigeren Brechungsindex hat als die erste Lichtführungsschicht (5), um eine interne Totalreflexion des Lichts innerhalb der ersten Lichtführungsschicht (5) zu erreichen, und
wobei die Lichtextraktionsmerkmale (6) auf einer zweiten Oberfläche des Basissubstrats (2) angeordnet sind, die der ersten Oberfläche des Basissubstrats (2) gegenüberliegt und einen mikrostrukturierten Film umfasst, und
wobei die Mantelschicht (8) eine Anzahl von Öffnungen (7) umfasst.

2. Ein Lichtführungsgerät (1) nach Anspruch 1, wobei der mikrostrukturierte Film das Basissubstrat (2) ist.

3. Ein Lichtführungsgerät (1) nach einem der Ansprüche 1 oder 2, wobei der mikrostrukturierte Film ein Helligkeitsverbesserungsfilm ist.

4. Ein Lichtführungsgerät (1) nach einem der vorhergehenden Ansprüche, wobei die eine oder die mehreren Lichtquellen (3) LEDs umfassen.

5. Ein Lichtführungsgerät (1) nach Anspruch 4, wobei die eine oder die mehreren LEDs seitlich emittierende LEDs umfassen, daraus bestehen oder im Wesentlichen daraus bestehen und über dem Basissubstrat (2) in einer direkt beleuchteten Anordnung angeordnet sind.

6. Ein Lichtführungsgerät (1) nach einem der vorstehenden Ansprüche, wobei das Basissubstrat (2) transparent ist.

7. Ein Lichtführungsgerät (1) nach einem der vorhergehenden Ansprüche, wobei die Mantelschicht (8) ein transparentes Polymermaterial ist.

8. Ein Lichtführungsgerät (1) nach einem der vorhergehenden Ansprüche, wobei die erste Lichtführungsschicht (5) ein transparentes flexibles Polymermaterial ist.

9. Ein Lichtführungsgerät (1) nach einem der vorhergehenden Ansprüche, wobei die Mantelschicht (8) dicker als 1 Mikrometer und weniger als 10 Mikrometer ist.

10. Ein Lichtführungsgerät (1) nach einem der vorhergehenden Ansprüche, das zudem eine Kühlkörperplatte umfasst.

11. Ein Anzeigegerät, das das Lichtführungsgerät (1) nach einem der Ansprüche 1 bis 10 umfasst.

12. Ein Verfahren zur Herstellung eines Lichtführungsgeräts (1), wobei das Verfahren Folgendes umfasst:
(i) Anbringung einer oder mehr Lichtquellen (3) auf einer ersten Oberfläche eines Basissubstrats (2);
(ii) Hinzufügung einer ersten Lichtführungsschicht (5) zur ersten Oberfläche, um die eine oder die mehreren Lichtquellen (3) auf der ersten Oberfläche des Basissubstrats (2) einzuschließen;
**gekennzeichnet durch**:
das Aufbringen einer Mantelschicht (8) auf die erste Oberfläche des Basissubstrats (2) vor dem Hinzufügen der ersten Lichtführungsschicht (5), um die Mantelschicht (8) an der Grenzfläche zwischen dem Basissubstrat (2) und der ersten Lichtführungsschicht (5) zur Verfügung zu stellen;
wobei die Mantelschicht (8) einen niedrigeren Brechungsindex hat als die erste Lichtführungsschicht (5), um eine interne Totalreflexion des Lichts innerhalb der ersten Lichtführungsschicht (5) zu erreichen;
wobei Lichtextraktionsmerkmale (6) auf einer zweiten Oberfläche des Basissubstrats (2) vorhanden sind, die der ersten Oberfläche gegenüberliegt und einen mikrostrukturierten Film umfasst, und
wobei die Mantelschicht (8) eine Anzahl von Öffnungen (7) umfasst.

## Revendications

1. Un dispositif de guidage de la lumière (1) comprenant :
un substrat de base (2), sur la première surface duquel sont montées une ou plusieurs sources de lumière (3) et une première couche de guidage de la lumière (5), la première couche de guidage de la lumière (5) étant disposée de sorte à encapsuler la ou les sources de lumière (3) sur la première surface ; et
des caractéristiques d'extraction de lumière (6) ;
**caractérisé par** :
une couche de placage (8) à l'interface entre le substrat de base (2) et la première couche de guidage de la lumière (5), dans lequel la couche de placage (8) présente un indice de réfraction inférieur à celui de la première couche de guidage de la lumière (5) de sorte à obtenir une réflexion interne totale de la lumière dans la première couche de guidage de la lumière (5) ; et
dans lequel les caractéristiques d'extraction de lumière (6) se trouvent sur une deuxième surface du substrat de base (2) qui est opposée à la première surface du substrat de base (2) et comprennent un film microstructuré ; et
dans lequel la couche de placage (8) comprend un certain nombre d'ouvertures (7).

2. Le dispositif de guidage de la lumière (1) de la revendication 1, dans lequel le film microstructuré est le substrat de base (2).

3. Le dispositif de guidage de la lumière (1) de la revendication 1 ou 2, dans lequel le film microstructuré est un film améliorant la luminosité.

4. Le dispositif de guidage de la lumière (1) de l'une des revendications précédentes, dans lequel la ou les sources de lumière (3) comprennent des LED.

5. Le dispositif de guidage de la lumière (1) de la revendication 4, dans lequel la ou les LED comprennent essentiellement des LED émettant la lumière latéralement et sont disposées sous la forme d'un réseau sur le substrat de base (2) suivant une disposition à éclairage direct.

6. Le dispositif de guidage de la lumière (1) de l'une des revendications précédentes, dans lequel le substrat de base (2) est transparent.

7. Le dispositif de guidage de la lumière (1) de l'une des revendications précédentes, dans lequel la couche de placage (8) est un matériau polymère transparent.

8. Le dispositif de guidage de la lumière (1) de l'une des revendications précédentes, dans lequel la première couche de guidage de la lumière (5) est un matériau polymère flexible transparent.

9. Le dispositif de guidage de la lumière (1) de l'une des revendications précédentes, dans lequel l'épaisseur de la couche de placage (8) est comprise entre 1 micron et 10 microns.

10. Le dispositif de guidage de la lumière (1) de l'une des revendications précédentes, comprenant en outre une plaque dissipatrice de chaleur.

11. Un dispositif d'affichage comprenant le dispositif de guidage de la lumière (1) de l'une des revendications 1 à 10.

12. Un procédé permettant de produire un dispositif de guidage de la lumière (1) consistant à :
(i) monter une ou plusieurs sources de lumière (3) sur la première surface d'un substrat de base (2) ;
(ii) ajouter une première couche de guidage de la lumière (5) sur la première surface de sorte à encapsuler la ou les sources de lumière (3) sur la première surface du substrat de base (2) ;
**caractérisé par** :
l'application d'une couche de placage (8) sur la première surface du substrat de base (2) avant l'ajout de la première couche de guidage de la lumière (5) de sorte à fournir la couche de placage (8) à l'interface entre le substrat de base (2) et la première couche de guidage de la lumière (5) ;
dans lequel la couche de placage (8) présente un indice de réfraction inférieur à celui de la première couche de guidage de la lumière (5) de sorte à obtenir une réflexion interne totale de la lumière dans la première couche de guidage de la lumière (5) ;
dans lequel les caractéristiques d'extraction de lumière (6) sont fournies sur une deuxième surface du substrat de base (2) qui est opposée à la première surface et comprennent un film microstructuré ; et
dans lequel la couche de placage (8) comprend un certain nombre d'ouvertures (7).
